# EUROPÄISCHE PATENTSCHRIFT

(11) **EP 3 721 695 B1**
(45) Veröffentlichungstag und Bekanntmachung des Hinweises auf die Patenterteilung: **10.08.2022**
(21) Anmeldenummer: 20151416.3
(22) Anmeldetag: 13.01.2020
(51) Int. Cl.: A01D 41/12

(54) **ERNTEMASCHINE UND FÖRDERSCHNECKE DAFÜR**
HARVESTER AND FEED SCREW FOR SAME
ENGIN D'ABATTAGE-FAÇONNAGE ET VIS TRANSPORTEUSE CORRESPONDANTE

(30) Priorität: 10.04.2019 DE 102019002637
(43) Veröffentlichungstag der Anmeldung: 14.10.2020
(73) Patentinhaber: CLAAS Selbstfahrende Erntemaschinen GmbH, 33428 Harsewinkel (DE)
(72) Erfinder: Brandmeier, Jonas, 33428 Harsewinkel (DE)
(74) Vertreter: CLAAS Gruppe

(56) Entgegenhaltungen:
- EP-A1- 0 478 847
- EP-B1- 1 120 027
- DE-A1- 3 205 605
- US-A- 4 029 228
- US-A1- 2012 155 996

## Beschreibung

Die vorliegende Erfindung betrifft eine Erntemaschine wie etwa einen Mähdrescher, und zwar insbesondere die Befüllung eines Ernteguttanks der Erntemaschine, sowie eine dafür ausgebildete Förderschnecke.

Da sich beim Dreschen das Korn von Nichtkornbestanteilen des Ernteguts nach unten absetzt, muss es anschließend aufwärts befördert werden, um einen Korntank des Mähdreschers zu befüllen. Hierzu dient oft ein Elevator mit an einer umlaufenden Kette umlaufenden Schaufeln, die am Boden des Dreschwerks gesammeltes Korn aufnehmen, anheben und über eine Korneinlassöffnung in einer Wand des Korntanks in letzteren abgeben. Auf diese Weise kann der Korntank nicht höher befüllt werden als bis zur Unterkante der Korneinlassöffnung.

Um das Aufnahmevermögen des Korntanks vollständiger nutzen zu können, wird daher in DE 44 19 435 C2 eine Förderschnecke vorgeschlagen, die, im Innern des Korntanks an der Korneinlassöffnung schwenkbar montiert, vom Elevator abgegebenes Korn aufnimmt und weiter anhebt. Eine Kornauslassöffnung der Förderschnecke schwimmt auf dem im Tank gesammelten Korn auf, so dass das hinzukommende Korn ungehindert abgegeben werden kann. Indem die Auslassöffnung bis in Höhe der Oberkanten der Wände des Korntanks anhebbar ist, kann der Korntank bis zu diesen Oberkanten hin befüllt werden.

Die auf diese Weise überbrückbare Höhe ist durch die horizontalen Abmessungen des Korntanks begrenzt, da die Förderschnecke in einer schwach geneigten Stellung im Innern des Tanks Platz finden muss.

Aus EP 1 120 027 B1 ist eine Förderschnecke mit zwei um einander kreuzende Förderachsen drehbaren Abschnitten bekannt. Indem ein unmittelbar an die Korneinlassöffnung des Tanks angeschlossener proximaler Abschnitt eine vertikale Förderachse hat, kann auf kleiner Grundfläche eine große Höhendifferenz überwunden werden, allerdings ergibt sich das Problem, dass von der Förderschnecke angehobenes Korn dazu neigt, durch die Korneinlassöffnung in den Elevator zurückzufallen, was den Elevator blockieren und eine Unterbrechung des Erntevorgangs nötig machen kann.

Aufgabe der Erfindung ist, eine Erntemaschine bzw. eine Förderschnecke für den Einbau in einem Ernteguttank einer Erntemaschine zu schaffen, die auf begrenzter Grundfläche des Ernteguttanks eine sichere Anhebung des Ernteguts zu einem möglichst hoch gelegenen Abgabepunkt ermöglichen.

Die Aufgabe wird gelöst, indem bei einer Erntemaschine mit einem Ernteguttank und einer tankinternen Förderschnecke, die sich von einer Guteinlassöffnung an einer Wand des Ernteguttanks ins Innere des Ernteguttanks erstreckt und wenigstens einen zur Guteinlassöffnung benachbarten proximalen Abschnitt und einen von der Guteinlassöffnung wenigstens durch den proximalen Abschnitt beabstandeten distalen Abschnitt umfasst, die zum Fördern des Ernteguts um in unterschiedlichen Richtungen verlaufende Förderachsen drehantreibbar sind, die Förderschnecke in einer Arbeitsstellung betreibbar ist, in der die Förderachse des distalen Abschnitts steiler orientiert ist als die des proximalen Abschnitts. So gewährleistet der relativ wenig steile proximale Abschnitt eine problemlose Gutübernahme vom Elevator, und die Gutübernahme vom proximalen zum distalen Abschnitt gelingt trotz der Steilheit des letzteren, da der proximale Abschnitt der Schnecke, anders als der Elevator, in der Lage ist, Erntegut in den nachfolgenden Abschnitt der Schnecke hineinzudrücken.

Die Förderachse des distalen Abschnitts kann in der Arbeitsstellung vertikal sein.

Der distale Abschnitt sollte in der Arbeitsstellung möglichst zentral im Ernteguttank platziert sein, so dass die Spitze eines sich an der Gutauslassöffnung bildenden Schüttkegels möglichst weit von den Wänden des Tanks entfernt ist und eine Spitze des Schüttkegels möglichst weit über die Oberkante des Ernteguttanks aufragen kann. Deswegen sollten sich die Abstände der Gutauslassöffnung zu zwei einander gegenüberliegenden Wänden des Tanks sich zweckmäßigerweise um nicht mehr als die Hälfte des kleineren Abstands voneinander unterscheiden. Vorzugsweise sollte die Gutauslassöffnung nicht weiter als 100mm, besser nicht weiter als 50 mm, vom Mittelpunkt einer Querschnittsfläche des Tanks entfernt sein.

Die Förderschnecke ist als eine zusammenhängende Baueinheit ausgebildet, die mit der Wand über ein eine erste Gelenkachse definierendes erstes Gelenk schwenkbar verbunden ist, so dass die Steilheit wenigstens des proximalen Abschnitts durch Schwenken um die erste Gelenkachse veränderbar ist. Diese erste Gelenkachse kann horizontal und parallel zur Wand orientiert sein; es kann aber auch sinnvoll sein, eine andere Orientierung zu wählen, um ggf. die Förderschnecke in einer Ruhestellung platzsparend im Ernteguttank verstauen zu können.

Um den distalen Abschnitt aus der in der Arbeitsstellung eingenommenen vertikalen Orientierung in eine platzsparendere Orientierung der Ruhestellung bringen zu können, kann der distale Abschnitte mit dem proximalen Abschnitt durch ein eine zweite Gelenkachse definierendes zweites Gelenk schwenkbar verbunden sein.

Um eine Veränderung des Winkels zwischen den Förderachsen des distalen und des proximalen Abschnitts zu ermöglichen, kann die zweite Gelenkachse die Förderachsen kreuzen.

Einer bevorzugten Ausgestaltung zufolge ist der Winkel zwischen den Förderachsen des distalen und des proximalen Abschnitts fest, und die Förderachse des proximalen Abschnitts fällt mit der Gelenkachse des distalen Abschnitts zusammen.

Die Gelenke können aneinander gekoppelt sein, um gleichzeitig zu schwenken, so dass proximaler und distaler Abschnitt gemeinsam angetrieben werden können, um von der Arbeitsstellung in die Ruhestellung und zurück überzugehen. Eine solche Kopplung kann insbesondere durch einen Riemen oder Lenker hergestellt werden, der an dem distalen Abschnitt und einer Wand des Korntanks entfernt von der ersten Gelenkachse angreift.

Denkbar ist auch, dass proximaler und distaler Abschnitt der Förderschnecke als voneinander getrennte Baueinheiten ausgebildet sind. Indem beide getrennt voneinander zwischen Arbeits- und Ruhestellung bewegbar sind und ggf. nur in der Arbeitsstellung so eng benachbart sind, dass eine Gutübergabe zwischen beiden möglich ist, kann eine besonders platzsparende Ruhestellung realisiert werden, da ein Auslassende des proximalen Abschnitts und ein Einlassende des distalen Abschnitts in der Ruhestellung voneinander beabstandet sein können.

Um das Fassungsvermögen für Korn zu vergrößern, ohne gleichzeitig die Bauhöhe des Mähdreschers über die von der StVZO gesetzten Grenzen zu erhöhen, ist es an sich bekannt, einen Mähdrescher mit einem ausklappbaren Tankaufsatz zu versehen, der im Straßenverkehr flachgelegt werden, im Ernteeinsatz aber ausgeklappt werden kann, um den Ernteguttank nach oben zu erweitern. Bei der Nutzung eines solchen Tankaufsatzes ergibt sich das Problem, dass wenn das Korn im Tankaufsatz höher steht als die Gutauslassöffnung der Förderschnecke, hinzukommendes Korn gegen den Druck von bereits auf der Gutauslassöffnung lastendem Korn in den Korntank hineingepresst werden muss. Dies ist nur mit hohem und mit der Füllhöhe stark steigendem Einsatz an Antriebsenergie möglich und führt zu verstärktem Kornbruch sowie Verschleiß im Antriebsstrang und an den Schnecken. Deswegen ist es bei einem solchen Mähdrescher besonders wichtig, eine Förderschnecke zu haben, die auf kleiner Fläche eine große Höhendifferenz überwinden kann, und deshalb sind Mähdrescher mit einem Tankaufsatz ein bevorzugtes Anwendungsgebiet der vorliegenden Erfindung.

Bei einer Erntemaschine mit Tankaufsatz sollte die Förderschnecke in ihrer Arbeitsstellung von unten in den Tankaufsatz eingreifen, um den Tank bis zu einem möglichst hohen Füllstand befüllen zu können, ohne dabei gegen einen Widerstand des Tankinhalts anarbeiten zu müssen.

Vorzugsweise liegt die Gutauslassöffnung des distalen Abschnitts in der Arbeitsstellung der Förderschnecke und des Tankaufsatzes mindestens so hoch wie ein tiefster Punkt der Oberkanten der Wandplatten.

In einer Ruhestellung sollte die Förderschnecke unter die Oberkanten des Tanks abgesenkt sein, um ein Zusammenklappen des Tankaufsatzes nicht zu behindern.

Ein Aktuator zum Verstellen der Förderschnecke zwischen der Ruhestellung und der Arbeitsstellung sollte aus der Ferne, insbesondere über ein Bedienelement in der Fahrerkabine, ansteuerbar sein.

Um die Drehung des distalen Abschnitts der Förderschnecke anzutreiben, sind die Abschnitte vorzugsweise untereinander durch ein Winkelgetriebe gekoppelt. So genügt ein Antrieb, der, z.B. über eine Drehdurchführung der Wand des Korntanks, am proximalen Abschnitt angreift, um auch den distalen Abschnitt anzutreiben.

Die Abschnitte der Förderschnecke sind vorzugsweise durch ein Winkelgetriebe gekoppelt. Ein solches Winkelgetriebe kann insbesondere ein Kardangelenk oder Weitwinkelgelenk umfassen.

Um hinzukommendes Erntegut sicher vom Elevator übernehmen und möglichst verlustarm fördern zu können, sollte die die Förderschnecke von einem Rohr umgeben sein. So können insbesondere unnötiger Kornbruch und ein hoher Aufwand von Antriebsenergie für nutzlose Wühlarbeit der Förderschnecke vermieden werden, die resultieren würden, wenn das bereits im Tank befindliche Korn frei zur Förderschnecke fließen und ein Volumen, aus dem das Korn durch die Förderwirkung der Förderschnecke abtransportiert worden ist, ungehindert wieder auffüllen könnte.

Das Rohr kann wenigstens eine Öffnung an seinem Umfang aufweisen, die den Austritt von Erntegut aus dem Rohr in den Ernteguttank erlaubt, solange dieser in Höhe der Öffnung noch nicht voll ist. Auch dies trägt zur Minimierung des Energieaufwands für die Förderung des Ernteguts und zur Minimierung des Bruchanteils im Erntegut bei.

Denkbar ist, ein durchgehendes, abknickendes Rohr zu verwenden, um beide Abschnitte der Förderschnecke zu umschließen. Eine erhebliche Vereinfachung des Aufbaus ergibt sich jedoch, wenn der proximale und der distale Abschnitt der Förderschnecke von einem proximalen bzw. distalen Abschnitt des Rohrs umgeben sind. Eine Lücke zwischen den beiden Abschnitten kann dann die oben angesprochene Öffnung bilden, über die Erntegut noch vor Erreichen der eigentlichen Gutauslassöffnung aus der Förderschnecke entweichen kann.

Alternativ kann es sinnvoll sein, das Rohr nur am proximalen Abschnitt der Förderschnecke vorzusehen, den distalen Abschnitt aber unverrohrt zu lassen.

Eine Lücke, über die Korn unmittelbar in den Tank austreten kann, kann auch zwischen der Wand und dem proximalen Abschnitt des Rohrs vorgesehen sein, über die das Erntegut die Förderschnecke komplett umgehen kann, solange der Füllstand im Tank niedrig genug ist, um einen Durchtritt von Erntegut über die Lücke in den Tank zu erlauben.

Um das in den proximalen Abschnitt oder vom proximalen zum distalen Abschnitt übergehende Erntegut vom Gewicht des eventuell darüber im Tank anstehenden Ernteguts zu entlasten und unnötige Wühlarbeit durch Rückfluss von Korn aus dem Tank zur Förderschnecke zu vermeiden, ist bevorzugt, dass die Lücke sich nur über einen unteren Teil des Umfangs der Förderschnecke erstreckt.

Die Drehzahl der Förderschnecke kann durch einen Massenstromsensor gesteuert sein. Ein solcher Sensor kann an beliebiger Stelle am Erntegutstrom im Mähdrescher angeordnet sein, vorzugsweise am Strom des Korns oder des Korn-Spreu-Gemischs hinter dem Ausgang eines Dreschwerks, vorgesehen sein. Indem die Drehzahl der Förderschnecke anhand des Massenstroms, vorzugsweise proportional zu diesem, gesteuert wird, kann ebenfalls Energieaufwand und Wühlarbeit minimiert werden.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: einen schematischen Schnitt durch einen Mähdrescher mit Förderschnecke gemäß der Erfindung;
- Fig. 2: eine perspektivische Ansicht eines Korntankaufsatzes des Mähdreschers in für die Straßenfahrt geschlossener Stellung;
- Fig. 3: den Korntankaufsatz in offener Stellung, mit der Förderschnecke in Ruhestellung;
- Fig. 4: den offenen Korntankaufsatz mit der Förderschnecke in Arbeitsstellung; und
- Fig. 5: einen schematischen Schnitt durch ein Förderaggregat.

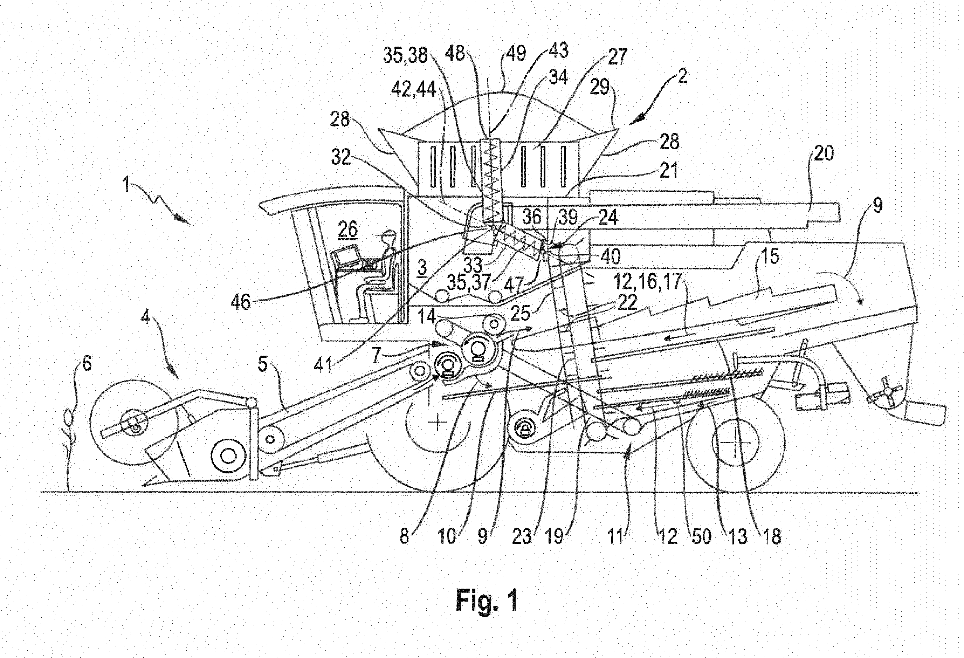

Fig. 1 zeigt einen schematischen Längsschnitt durch einen Mähdrescher 1 mit einem faltbaren Aufsatz 2 zur Vergrößerung des Volumens eines Korntanks 3. Der Mähdrescher 1 ist frontseitig mit einem Schneidwerk 4 ausgestattet, das an einem Schrägförderer 5 angeordnet ist. Mit dem Schneidwerk 4 nimmt der Mähdrescher 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 unterteilt wird. Das Korn-Spreu-Gemisch 8 wird über einen Vorbereitungsboden 10 direkt zu einer Reinigungseinrichtung 11 gefördert, die das Korn 12 von den Nichtkornbestandteilen 13, das heißt von Halm- und Spreuteilen trennt.

Hinter dem Dreschwerk 7 ist eine entgegen dem Uhrzeigersinn rotierende Wendetrommel 14 angeordnet, die den aus ausgedroschenen Halmen bestehenden Gutstrom 9 auf einen Hordenschüttler 15 fördert. Der Hordenschüttler 15 trennt noch im Gutstrom 9 vorhandenes Korn 12, Kurzstroh 16 und Spreu 17, die über einen Rücklaufboden 18 ebenfalls in die Reinigungseinrichtung 11 gelangen. Die von der Reinigungseinrichtung 11 abgetrennten Körner 12 fördert ein Kornelevator 19 in den Korntank 3. Ein Massenstromsensor 50 zum Erfassen des Massenstroms des Korns ist z.B. auf dem Weg des Korns von der Reinigungseinrichtung 11 zum Kornelevator 19 angeordnet.

Der Kornelevator 19 umfasst ein mit Schaufeln 22 bestücktes, endlos umlaufendes Band 23. Die Schaufeln 22 übernehmen das Korn von der Reinigungseinrichtung 11 und fördern es in einem Schacht aufwärts bis zu einer Öffnung 24 in einer Wand 25 des Korntanks 3.

Der Korntank 3 ist als ein Behälter mit im Wesentlichen rechteckförmiger Grundfläche ausgeführt und hinter einer Fahrerkabine 26 des Mähdreschers 1 angeordnet ist. Der Korntank 3 ist an seiner Oberseite offen, an Oberkanten 21 seiner Wände sind mehrere den Aufsatz 2 bildende Platten 27, 28 angelenkt. Die Platten 27, 28 sind zwischen einer über der Öffnung miteinander überlappenden geschlossenen Position und einer in Fig. 1 gezeigten Arbeitsposition schwenkbar, in der der Aufsatz 2 den Korntank 3 nach oben trichterförmig erweitert.

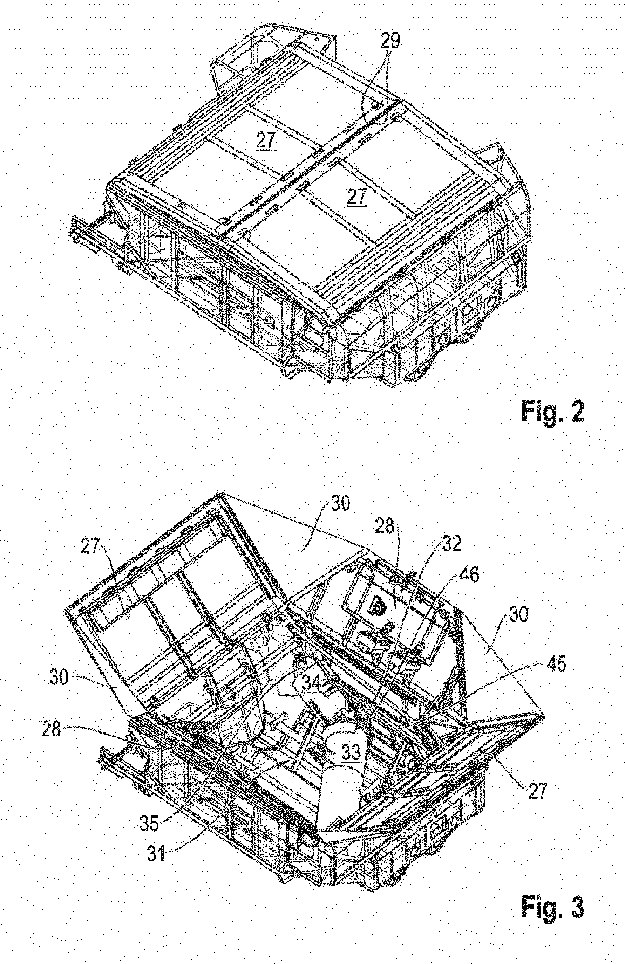

Fig. 2 zeigt eine perspektivische Ansicht des Korn-Aufsatzes 2 in der geschlossenen Position. Die offene Oberseite des Korntanks 3 ist rechteckig aber nicht notwendigerweise quadratisch; die kürzeren Kanten des Rechtecks erstrecken sich hier in der Längsrichtung des Mähdreschers 1, und die beiden an sie angelenkten Platten 27 sind so bemessen, dass ihre gelenkfernen Kanten 29 einander in etwa berühren und sie die darunterliegenden Platten 28 komplett verbergen.

In der Ansicht der Fig. 3 sind die Platten 27, 28 in ihre auch in Fig. 1 gezeigte Arbeitsposition geschwenkt, in der sie zusammen mit die kurzen Kanten der Platten 27, 28 verbindenden dreieckigen Elementen 30 den Korntank 3 trichterförmig nach oben erweitern.

In der Stellung der Fig. 3 geben die Platten 27, 28 den Blick auf ein Förderaggregat 31 im Innern des Korntanks 3 frei. Das Förderaggregat 31 umfasst zwei an einem Knie 32 unter einem stumpfen Winkel aufeinandertreffende Rohrabschnitte 33, 34 und eine Förderschnecke 35 (s. Fig. 1), von der ein proximaler Abschnitt 37 im Rohrabschnitt 33 und ein distaler Abschnitt 38 im Rohrabschnitt 34 aufgenommen ist. Eine Basis 36 des Förderaggregats 31 ist an der Wand 25 benachbart zur Öffnung 24 montiert, um den Rohrabschnitt 33 so vor der Öffnung 24 zu platzieren, dass durch die Öffnung 24 gefördertes Korn von der Förderschnecke 35 aufgenommen werden kann.

Zu diesem Zweck kann ein offenes Ende des Rohrabschnitts 33 unmittelbar vor der Öffnung 24 platziert sein. Vorzugsweise ist das offene Ende gegen die Öffnung seitwärts und nach unten versetzt. Der Seitwärtsversatz erlaubt es, die Welle 40 ohne Platzkonflikt mit dem Kornelevator 19 durch die Wand 25 zu führen, infolge des Abwärtsversatzes kann über die Öffnung 24 zugeführtes Korn im Innern des Tanks vor das offene Ende rutschen und dort von der Förderschnecke 35 aufgenommen werden.

Der Rohrabschnitt 33 ist um eine zu der Wand 25 parallele horizontale Gelenkachse 39 schwenkbar. Die Abschnitte 37, 38 der Förderschnecke 35 sind miteinander und mit einer durch die Öffnung 24 verlaufenden Antriebswelle 40 jeweils über Kardangelenke 41 verbunden und um mit den Längsachsen der Rohrabschnitte 33, 34 übereinfallende Förderachsen 42, 43 drehbar. Die Rohrabschnitte 33, 34 verlaufen in der gezeigten Stellung horizontal oder allenfalls leicht von der Öffnung 24 aus ansteigend, so dass sie auch in der geschlossenen Position des Aufsatzes 2 im Korntank 3 Platz finden.

Der Rohrabschnitt 34 ist mit dem Rohrabschnitt 33 um eine Gelenkachse 44 schwenkbar verbunden, die hier mit der proximalen Förderachse 42 zusammenfällt. Zwischen dem Rohrabschnitt 34 und einer Wand des Korntanks 3 ist ein Gurt 45 gespannt, der den Rohrabschnitt 34 in einer leicht ansteigenden Orientierung hält. Anstelle des Gurts 45 könnte auch eine gelenkig mit dem Rohrabschnitt 34 und der Wand verbundene Stange vorgesehen sein.

Die Rohrabschnitte 33, 34 umgeben die Förderschnecke 35 nicht auf ihrer ganzen Länge lückenlos; in

Fig. 3 erkennt man eine Lücke 46 zwischen den Rohrabschnitten 33, 34 an einer Außenseite des Knies 32; eine entsprechende Lücke 46 (s. Fig. 1) kann zwischen dem Rohrabschnitt 33 und der Wand 25 vorhanden sein.

Die Antriebswelle 40 kann an einen Antrieb des Elevators 19 fest oder über eine Kupplung lösbar gekoppelt sein, um mit dem Elevator 19 zwangsweise oder nur bei Bedarf mitzulaufen. Solange der Füllstand des Korntanks 3 unter der Öffnung 24 liegt, kann das vom Elevator 19 geförderte Korn über die Lücke 47 in den Korntank 3 gelangen, und die Förderschnecke 35 läuft leer oder kann abgekoppelt sein.

Spätestens sobald das Korn im Korntank 3 an die Lücke 47 heranreicht und hinzukommendes Korn dort nicht mehr austreten kann, wird die Förderschnecke 35 in Betrieb genommen. Dies kann zunächst in der in Fig. 3 gezeigten Stellung geschehen und führt zunächst dazu, dass ein Großteil des Korns das Förderaggregat 31 an der Lücke 46 verlässt. Da der Höhenunterschied zwischen den Lücken 47 und 46 klein ist, ist die benötigte Antriebsleistung gering.

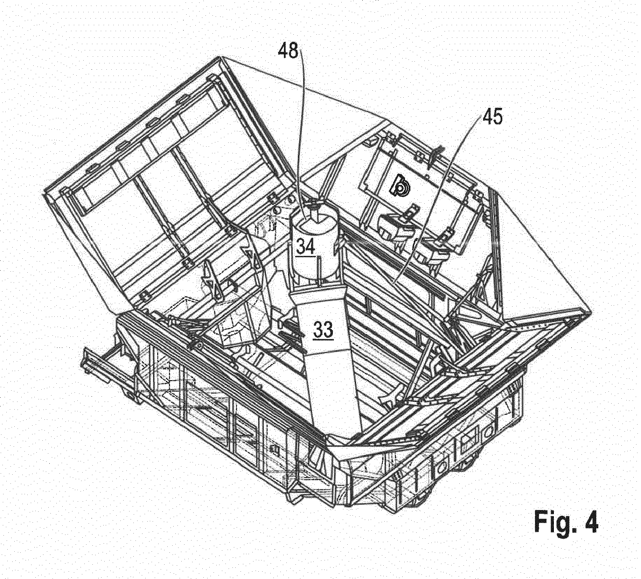

Denkbar ist aber auch, das Förderaggregat gleich zu Beginn des Erntebetriebs in die Arbeitsstellung der Fig. 4 zu bringen. In dieser Stellung ist der Rohrabschnitt 33 und mit ihm der darin verlaufende proximale Abschnitt 37 der Förderschnecke 35 um die Gelenkachse 39 in eine ansteigende Stellung geschwenkt. Die Steigung der proximalen Förderachse 42 beträgt hier wenigstens 30°, vorzugsweise ca. 45°. Das Knie 32 ist mittig über der offenen Oberseite des Korntanks platziert. Der Rohrabschnitt 34 ist durch die Zugwirkung des Gurtes 45 in eine vertikale Orientierung geschwenkt.

Auch in dieser Stellung tritt Korn solange an der Lücke 47 in den Korntank 3 ein, bis der Kornstand im Tank 2 an die Lücke 47 heranreicht; ab dann wird hinzukommendes Korn bis zur Lücke 46 weiterbefördert und bildet so im Tank 3 einen Schüttkegel mit zentral unter der Lücke 46 liegendem Scheitel.

Sobald der Scheitel die Lücke 46 erreicht und das Korn dort nicht mehr austreten kann, wird es vom distalen Abschnitt 38 der Förderschnecke 35 angehoben bis zu einer Auslassöffnung 48 am oberen Ende des Rohrabschnitt 34. So kann der Füllstand des Korns weiter steigen, und auch wenn der Scheitel des Schüttkegels die Auslassöffnung 48 erreicht, kann Korn weiterhin mittels der Förderschnecke 35 in den Tank 3 bzw. den Aufsatz 2 hineingedrückt werden, so dass Spiegel des Korns über die Auslassöffnung 48 hinaus ansteigen kann. Infolge der zentralen Platzierung der Auslassöffnung kann der Schüttkegel, wie in Fig. 1 gezeigt und mit 49 bezeichnet, bis deutlich über die Oberkanten der Platten 27, 28 des Aufsatzes 2 hinaus wachsen, und das Fassungsvermögen des Aufsatzes 2 kann bis zum Letzten ausgenutzt werden, bevor ein Abtanken über einen Entleerförderer 20 nötig wird.

Solange das Förderaggregat 31 von Korn bedeckt ist, ist seine Stellung innerhalb des Tanks 3 und des Aufsatzes 2 fest. Sobald der Spiegel des Korns weit genug gesunken ist, um das Förderaggregat 31 wieder freizugeben, kann dieses zurück in die Stellung der Fig. 3 schwenken, wobei das Gewicht des Rohrabschnitts 34 genügt, um wenn der Rohrabschnitt 33 um die Gelenkachse 39 abwärts geschwenkt wird, auch den Rohrabschnitt 34 um die Gelenkachse 44 abwärts schwenken zu lassen.

Die Schwenkbewegungen der Platten 27, 28 und des Rohrabschnitts 33 können mechanisch aneinander gekoppelt oder durch gekoppelt gesteuerte Motoren angetrieben sein, um sicherzustellen, dass das Förderaggregat 31 beim Öffnen des Aufsatzes 2 automatisch in die Stellung der Fig. 4 übergeht bzw. beim Schließen des Aufsatzes 2 das Förderaggregat 31 rechtzeitig nach unten ausweicht, um der Bewegung der Platten 27, 28 nicht im Wege zu sein. Ein Bedienelement, über das die Motoren zum Schwenken der Klappen 27, 28 und des Rohrabschnitts 33 steuerbar sind, ist in der Fahrerkabine 26 vorgesehen.

Einer nicht eigens gezeichneten Ausgestaltung zufolge kann der distale Rohrabschnitt 34 fehlen. Die Konsequenz hieraus ist, dass, wenn der distale Abschnitt 38 der Förderschnecke noch nicht vollständig unter Korn begraben ist, hinzukommendes Korn von der Förderschnecke nur bis unmittelbar an die Oberfläche des im Tank gesammelten Korns gefördert wird und dort von der Schnecke abgleitet. Die Förderhöhe ist daher nicht größer als unbedingt notwendig, was sich günstig auf den Antriebsenergieverbrauch auswirkt.

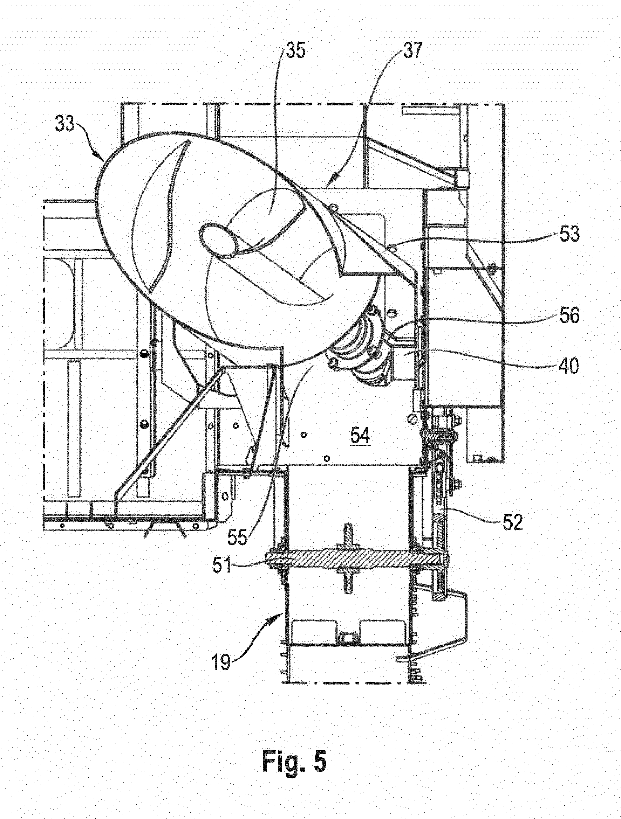

Fig. 5 zeigt einen schematischen Schnitt durch die Basis 36 eines Förderaggregats 31 gemäß einer bevorzugten Ausgestaltung. Der Schnitt verläuft parallel zur Wand 25 in Ebene, die die Gelenkachse 39 enthält. Die Antriebswelle 40 verläuft senkrecht zur Schnittebene und kreuzt die Wand 25 an einer gegen den Elevator 19 seitwärts versetzten Stelle, an der an der Außenseite der Wand 25, außerhalb des Korntanks 3, Platz für einen die Antriebswelle 40 antreibenden Motor oder ein Getriebe ist. Der Motor kann ein Elektromotor oder ein Hydraulikmotor sein, der seinerseits durch eine von einem Fahrmotor des Mähdreschers 1 angetrieben ist. Von Hydraulikmotor und Pumpe kann wenigstens einer eine verstellbare Verdrängung aufweisen, um das Drehzahlverhältnis zwischen Fahrmotor und Welle 40 zu variieren. Als Getriebe mit variablem Drehzahlverhältnis kommt z.B. ein Variator-Riemengetriebe in Betracht. Die Drehzahl der Welle 40 oder das Drehzahlverhältnis ist anhand des vom oben erwähnten Massenstromsensor 50 erfassten Massenstrom des Korns gesteuert.

Fig. 5 zeigt einen horizontalen Schnitt durch eine Ecke des Korntanks 3. Der Schnitt verläuft durch eine obere Umlenkwelle 51 des Kornelevators und die dazu benachbarte Öffnung 24 der Wand 25. Die Antriebswelle 40 verläuft unterhalb der Schnittebene parallel zur Umlenkwelle 51, was die Kopplung beider über einen Riementrieb 52 vereinfacht. Zwischen der Antriebswelle 40 und dem proximalen Abschnitt 37 der Förderschnecke 35 ist ein Winkelgetriebe 56 zuerkennen. Ein Gehäuse 53 umschließt innerhalb des Korntanks 3 die Öffnung 24 und ein offenes Ende 54 des Rohrabschnitts 33 der Förderschnecke. Das Gehäuse 53 hat an seiner Unterseite eine Öffnung 55, so dass über die Öffnung 24 eingeführtes Korn aus dem Gehäuse herausfallen kann, ohne die Förderschnecke zu erreichen, solange der Füllstand im Korntank 3 tiefer liegt als die Öffnung 55. Erst wenn die Öffnung 55 von Korn versperrt ist, steigt der Kornspiegel im Gehäuse 53 so weit, dass die Förderschnecke 35 Korn zu fassen bekommt. Deswegen erfordert der Betrieb der Förderschnecke 35 erst dann in nennenswertem Umfang Antriebsleistung, wenn die Öffnung 55 versperrt ist und tatsächlich Korn von der Förderschnecke 35 angehoben wird.

### Bezugszeichenliste

1 Mähdrescher
2 Aufsatz
3 Korntank
4 Schneidwerk
5 Schrägförderer
6 Erntegut
7 Dreschwerk
8 Korn-Spreu-Gemisch
9 Gutstrom
10 Vorbereitungsboden
11 Reinigungseinrichtung
12 Korn
13 Nichtkornbestandteile
14 Wendetrommel
15 Hordenschüttler
16 Kurzstroh
17 Spreu
18 Rücklaufboden
19 Kornelevator
20 Entleerförderer
21 Oberkante
22 Schaufel
23 Band
24 Öffnung
25 Wand
26 Fahrerkabine
27 Platte
28 Platte
29 gelenkferne Kante
30 dreieckiges Element
31 Förderaggregat
32 Knie
33 Rohrabschnitt
34 Rohrabschnitt
35 Förderschnecke
36 Basis
37 proximaler Abschnitt
38 distaler Abschnitt
39 Gelenkachse
40 Antriebswelle
41 Kardangelenk
42 Förderachse
43 Förderachse
44 Gelenkachse
45 Gurt
46 Lücke
47 Lücke
48 Auslassöffnung
49 Schüttkegel
50 Massenstromsensor
51 Umlenkwelle
52 Riementrieb
53 Gehäuse
54 offenes Ende
55 Öffnung
56 Winkelgetriebe

## Patentansprüche

1. Erntemaschine mit einem Ernteguttank (3) und einer tankinternen Förderschnecke (35), die sich von einer Guteinlassöffnung (24) an einer Wand (25) des Ernteguttanks (3) ins Innere des Ernteguttanks (3) erstreckt und wenigstens einen zur Guteinlassöffnung (24) benachbarten proximalen Abschnitt (37) und einen von der Guteinlassöffnung (24) wenigstens durch den proximalen Abschnitt (37) beabstandeten distalen Abschnitt (38) umfasst, die um in unterschiedlichen Richtungen verlaufende Förderachsen (42, 43) drehbar sind, **dadurch gekennzeichnet, dass** die Förderschnecke (35) in einer Arbeitsstellung betreibbar ist, in der die Förderachse (43) des distalen Abschnitts (38) steiler orientiert ist als die Förderachse (42) des proximalen Abschnitts (37), wobei die Förderschnecke (35) mit der Wand (25) über ein eine erste Gelenkachse (39) definierendes erstes Gelenk schwenkbar verbunden ist und die Steilheit wenigstens des proximalen Abschnitts (37) durch Schwenken um die erste Gelenkachse (39) veränderbar ist.

2. Erntemaschine nach Anspruch 1, **dadurch gekennzeichnet, dass** die Förderachse (43) des distalen Abschnitts (38) in der Arbeitsstellung vertikal ist.

3. Erntemaschine nach einem der vorhergehenden Ansprüche, **dadurch gekennzeichnet, dass** der distale Abschnitt (38) mit dem proximalen Abschnitt (37) durch ein eine zweite Gelenkachse (44) definierendes zweites Gelenk schwenkbar verbunden ist.

4. Erntemaschine nach Anspruch 3, **dadurch gekennzeichnet, dass** die zweite Gelenkachse (44) die Förderachse (42) des proximalen Abschnitts (37) ist.

5. Erntemaschine nach einem der vorhergehenden Ansprüche, **gekennzeichnet durch** einen Tankaufsatz (2) mit an Oberkanten von Wänden (25) des Ernteguttanks (3) angelenkten Wandplatten (27, 28), die zwischen einer auf dem Ernteguttank (3) aufliegenden Ruhestellung und einer Arbeitsstellung schwenkbar sind, in der sie von den Oberkanten aufragen, um den Ernteguttank (3) nach oben zu erweitern.

6. Erntemaschine nach Anspruch 5, **dadurch gekennzeichnet, dass** die Förderschnecke (35) in ihrer Arbeitsstellung in den Tankaufsatz (2) eingreift und in einer Ruhestellung unter die Oberkanten in den Ernteguttank (3) abgesenkt ist.

7. Erntemaschine nach Anspruch 5 oder 6, **dadurch gekennzeichnet, dass** eine Auslassöffnung (48) des distalen Abschnitts (38) in der Arbeitsstellung der Förderschnecke (35) und des Tankaufsatzes (2) mindestens so hoch liegt wie ein tiefster Punkt der Oberkanten der Wandplatten (27, 28).

8. Erntemaschine nach einem der vorhergehenden Ansprüche, **dadurch gekennzeichnet, dass** die Förderschnecke (35) wenigstens auf einem Teil ihrer Länge von einem Rohr (33, 34) umgeben ist.

9. Erntemaschine nach Anspruch 8, **dadurch gekennzeichnet, dass** das Rohr (33, 34) wenigstens eine Öffnung (46, 47) an seinem Umfang aufweist, die den Austritt von Erntegut aus dem Rohr in den Ernteguttank (3) erlaubt.

10. Erntemaschine nach Anspruch 8 oder 9, **dadurch gekennzeichnet, dass** das Rohr (33) den proximalen Abschnitt (37) der Förderschnecke (35) umgibt und dass der distale Abschnitt (34) der Förderschnecke (35) nicht verrohrt ist.

11. Erntemaschine nach einem der Ansprüche 8 bis 10, **dadurch gekennzeichnet, dass** zwischen zwei stumpfwinklig aufeinandertreffenden Abschnitten (33, 34) des Rohrs und/oder zwischen dem Rohr und und der Wand (25) eine Lücke (46, 47) offen ist.

12. Erntemaschine nach Anspruch 11, **dadurch gekennzeichnet, dass** die wenigstens eine Lücke (46, 47) sich nur über einen unteren Teil des Umfangs der Förderschnecke (35) erstreckt.

13. Erntemaschine nach einem der vorhergehenden Ansprüche, **dadurch gekennzeichnet, dass** die Drehzahl der Förderschnecke (35) durch einen Massenstromsensor gesteuert ist.

## Claims

1. A harvesting machine with a harvested material tank (3) and a screw conveyor (35) inside the harvested material tank and which extends from a material intake opening (24) at a wall (25) of the harvested material tank (3) into the interior of the harvested material tank (3) and comprising at least one proximal section (37) adjacent to the material intake opening (24) and a distal section (38) spaced apart from the material intake opening (24) by at least the proximal section (37), the sections being rotatable about conveying axes (42, 43) running in different directions, **characterized in that** the screw conveyor (35) can be operated in a working position in which the conveying axis (43) of the distal section (38) is more inclined in orientation than the conveying axis (42) of the proximal section (37), wherein the screw conveyor (35) is pivotably connected to the wall (25) via a first joint defining a first joint axis (39), and the inclination of at least the proximal section (37) can be varied by pivoting about the first joint axis (39).

2. The harvesting machine according to claim 1, **characterized in that** in the working position, the conveying axis (43) of the distal section (38) is vertical.

3. The harvesting machine according to one of the preceding claims, **characterized in that** the distal section (38) is pivotably connected to the proximal section (37) by means of a second joint defining a second joint axis (44).

4. The harvesting machine according to claim 3, **characterized in that** the second joint axis (44) is the conveying axis (42) of the proximal section (37).

5. The harvesting machine according one of the preceding claims, **characterized by** a tank top unit (2) with wall plates (27, 28) which are articulated at upper edges of walls (25) of the harvested material tank (3) and which can be pivoted between a rest position lying on the harvested material tank (3) and a working position in which they jut out over the upper edges in order to extend the harvested material tank (3) upwards.

6. The harvesting machine according to claim 5, **characterized in that** in its working position, the screw conveyor (35) encroaches into the tank top unit (2) and in a rest position, it sinks below the upper edges into the harvested material tank (3).

7. The harvesting machine according to claim 5 or claim 6, **characterized in that** in the working position of the screw conveyor (35) and of the tank top unit (2), a discharge opening (48) of the distal section (38) is positioned at least at the same height as a lowermost point of the upper edges of the wall plates (27, 28).

8. The harvesting machine according to one of the preceding claims, **characterized in that** the screw conveyor (35) is surrounded by a tube (33, 34) over at least a portion of its length.

9. The harvesting machine according to claim 8, **characterized in that** the tube (33, 34) has at least one opening (46, 47) at its circumference which enables crop to be discharged from the tube into the harvested material tank (3).

10. The harvesting machine according to claim 8 or claim 9, **characterized in that** the tube (33) surrounds the proximal section (37) of the screw conveyor (35), and **in that** the distal section (38) of the screw conveyor (35) is not encased by a tube.

11. The harvesting machine according to one of claims 8 to 10, **characterized in that** an open gap (46, 47) is positioned between two sections (33, 34) of the tube which meet at an obtuse angle and/or is positioned between the tube and the wall (25).

12. The harvesting machine according to claim 11, **characterized in that** the at least one gap (46, 47) extends over only a lower portion of the circumference of the screw conveyor (35).

13. The harvesting machine according to one of the preceding claims, **characterized in that** the rate of rotation of the screw conveyor (35) is controlled by means of a mass flow sensor.

## Revendications

1. Machine de récolte comprenant une trémie de produit récolté (3) et une vis d'alimentation (35) interne à la trémie, laquelle s'étend vers l'intérieur de la trémie de produit récolté (3) à partir d'une ouverture d'entrée de produit (24) au niveau d'une paroi (25) de la trémie de produit récolté (3) et inclut au moins une portion proximale (37) voisine de l'ouverture d'entrée de produit (24) et une portion distale (38) distante de l'ouverture d'entrée de produit (24) au moins du fait de la portion proximale (37), lesquelles peuvent tourner autour d'axes d'alimentation (42, 43) s'étendant dans des directions différentes, **caractérisée en ce que** la vis d'alimentation (35) est utilisable dans une position de travail dans laquelle l'axe d'alimentation (43) de la portion distale (38) est orienté de façon plus pentue que l'axe d'alimentation (42) de la portion proximale (37), la vis d'alimentation (35) étant reliée à la paroi (25) de manière pivotante par l'intermédiaire d'une première articulation définissant un premier axe d'articulation (39), et la pente au moins de la portion proximale (37) étant modifiable par l'intermédiaire d'un pivotement autour du premier axe d'articulation (39).

2. Machine de récolte selon la revendication 1, **caractérisée en ce que**, dans la position de travail, l'axe d'alimentation (43) de la portion distale (38) est vertical.

3. Machine de récolte selon une des revendications précédentes, **caractérisée en ce que** la portion distale (38) est reliée à la portion proximale (37) de manière pivotante par l'intermédiaire d'une seconde articulation définissant un second axe d'articulation (44).

4. Machine de récolte selon la revendication 3, **caractérisée en ce que** le second axe d'articulation (44) est l'axe d'alimentation (42) de la portion proximale (37).

5. Machine de récolte selon une des revendications précédentes, **caractérisée par** une superstructure de trémie (2) comprenant des panneaux de paroi (27, 28) qui sont articulés avec des bords supérieurs de parois (25) de la trémie de produit récolté (3) et qui sont pivotants entre une position de repos reposant à plat sur la trémie de produit récolté (3) et une position de travail dans laquelle ils se dressent à partir des bords supérieurs afin d'agrandir la trémie de produit récolté (3) vers le haut.

6. Machine de récolte selon la revendication 5, **caractérisée en ce que**, dans sa position de travail, la vis d'alimentation (35) pénètre dans la superstructure de trémie (2) et, dans une position de repos, est descendue dans la trémie de produit récolté (3) en dessous des bords supérieurs.

7. Machine de récolte selon la revendication 5 ou 6, **caractérisée en ce que**, dans la position de travail de la vis d'alimentation (35) et de la superstructure de trémie (2), une ouverture de sortie (48) de la portion distale (38) se trouve au moins à la même hauteur qu'un point le plus bas des bords supérieurs des panneaux de paroi (27, 28).

8. Machine de récolte selon une des revendications précédentes, **caractérisée en ce que** la vis d'alimentation (35) est entourée au moins sur une partie de sa longueur par un tube (33, 34).

9. Machine de récolte selon la revendication 8, **caractérisée en ce que**, sur sa périphérie, le tube (33, 34) comporte au moins une ouverture (46, 47) qui autorise la sortie de produit récolté dans la trémie de produit récolté (3) par le tube.

10. Machine de récolte selon la revendication 8 ou 9, **caractérisée en ce que** le tube (33) entoure la portion proximale (37) de la vis d'alimentation (35) et **en ce que** la portion distale (34) de la vis d'alimentation (35) n'est pas tubée.

11. Machine de récolte selon une des revendications 8 à 10, **caractérisée en ce que**, entre deux portions du tube (33, 34) se rencontrant à angle obtus et/ou entre le tube et et la paroi (25), s'ouvre un interstice (46, 47).

12. Machine de récolte selon la revendication 11, **caractérisée en ce que** le au moins un interstice (46, 47) ne s'étend que sur une partie inférieure de la périphérie de la vis d'alimentation (35).

13. Machine de récolte selon une des revendications précédentes, **caractérisée en ce que** la vitesse de rotation de la vis d'alimentation (35) est commandée par l'intermédiaire d'un capteur de débit massique.
